# EUROPEAN PATENT SPECIFICATION

(11) **EP 4 238 689 B1**
(45) Date of publication and mention of the grant of the patent: **20.11.2024**
(21) Application number: 22160156.0
(22) Date of filing: 04.03.2022
(51) Int. Cl.: B23K 26/06, B23K 26/082, B23K 103/00, B23K 26/34, B23K 26/352

(54) **MARKING APPARATUS AND MARKING METHOD**
MARKIERUNGSGERÄT UND MARKIERUNGSVERFAHREN
APPAREIL DE MARQUAGE ET PROCÉDÉ DE MARQUAGE

(43) Date of publication of application: 06.09.2023
(73) Proprietor: Cajo Technologies Oy, 90440 Kempele (FI)
(72) Inventor: Karsikas, Tomi, 90440 Kempele (FI); Karsikas, Jesse, 90440 Kempele (FI)
(74) Representative: Kolster Oy Ab

(56) References cited:
- EP-A2- 0 894 896
- EP-B1- 3 548 295

## Description

### Field

The invention relates to a marking apparatus and a marking method (see, for example, EP3548295 B1).

### Background

A carbon dioxide laser can be used to make dark markings such as data matrices and barcodes on cardboard. When performing the transference of the marks care should be taken because a right amount of optical power should be delivered to the cardboard in order to avoid burning but still ensuring a clearly readable marks. However, this kind of careful marking to the surface of cardboard requires several process stages. Additionally, the present marking possibilities do not respond properly to the desired variety of the markings.

### Brief description

The present invention seeks to provide an improvement in the markings.

The invention is defined by the independent claims. Embodiments are defined in the dependent claims.

If one or more of the embodiments is considered not to fall under the scope of the independent claims, such an embodiment is or such embodiments are still useful for understanding features of the invention.

### List of drawings

Example embodiments of the present invention are described below, by way of example only, with reference to the accompanying drawings, in which
Figure 1 illustrates an example of a marking apparatus;
Figure 2 illustrates an example of a marking apparatus with an optical beam deflector;
Figures 3 to 8 illustrate examples of representations on a surface of the solid material of vegetable fibers;
Figure 9 illustrates an example of a controller of the marking apparatus; and
Figure 10 illustrates of an example of a flow chart of a marking method.

### Description of embodiments

The following embodiments are only examples. Although the specification may refer to "an" embodiment in several locations, this does not necessarily mean that each such reference is to the same embodiment(s), or that the feature only applies to a single embodiment.

The articles "a" and "an" give a general sense of entities, structures, components, compositions, operations, functions, connections or the like in this document. Note also that singular terms may include pluralities.

Single features of different embodiments may also be combined to provide other embodiments. Furthermore, words "comprising" and "including" should be understood as not limiting the described embodiments to consist of only those features that have been mentioned and such embodiments may also contain features/structures that have not been specifically mentioned. All combinations of the embodiments are considered possible if their combination does not lead to structural or logical contradiction.

The term "about" means that quantities or any numeric values are not exact and typically need not be exact. The reason may be tolerance, resolution, measurement error, rounding off or the like, or a fact that the feature of the solution in this document only requires that the quantity or numeric value is approximately that large. A certain tolerance is always included in real life quantities and numeric values.

It should be noted that while Figures illustrate various embodiments, they are simplified diagrams that only show some structures and/or functional entities. The connections shown in the Figures may refer to logical or physical connections. It is apparent to a person skilled in the art that the described apparatus may also comprise other functions and structures than those described in Figures and text. It should be appreciated that details of some functions, structures, and the signalling used for measurement and/or controlling are irrelevant to the actual invention. Therefore, they need not be discussed in more detail here.

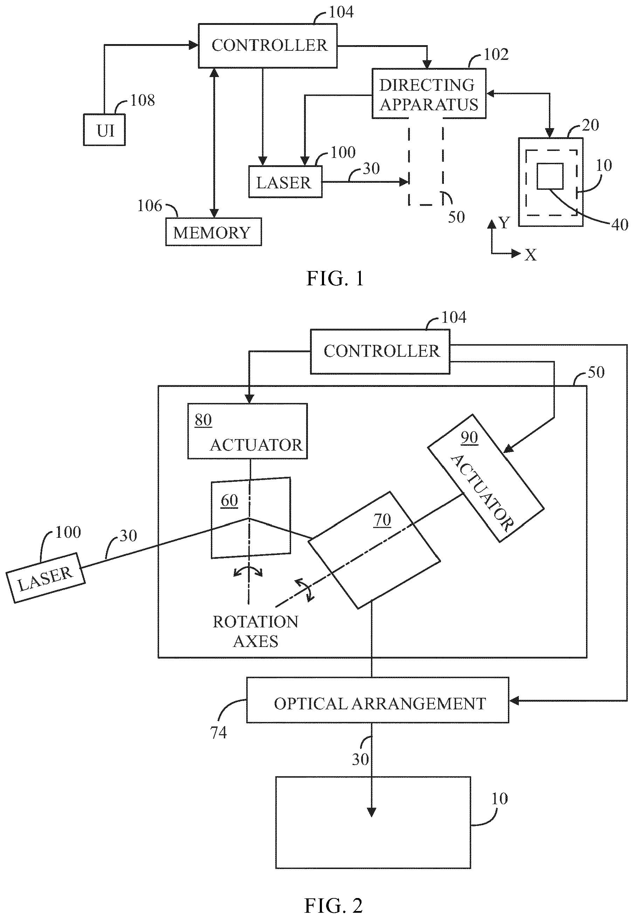

Fig. 1 illustrates an example of a marking apparatus. The marking apparatus comprises at least one carbon dioxide laser 100, which output a laser beam 30, and at least one laser beam directing apparatus 102, which directs the laser beam 30 to a marking area 20. From this on the at least one laser beam directing apparatus 102 is called the laser beam directing apparatus 102, for simplicity. The marking area 20 is for a solid material 10 of vegetable fibers with natural hue. The solid material 10 of vegetable fibers may be cardboard or paper which is unbleached or only partially bleached having more or less the natural hue. When the solid material 10 of vegetable fibers is at least partly inside or fully within the marking area 20 a representation 40 of at least one mark of the one or more marks, information on which is in one or more memories 108, can be formed, in the following manner, on the solid material 10 of vegetable fibers. The representation 40 is an image of the at least one mark.

At least one controller 104 receives information on the at least one mark from the one or more memories 108. From this on the at least one controller 104 is called the controller 104, for simplicity. Then the controller 104 controls the laser beam directing apparatus 102 and/or the at least one carbon dioxide laser 100 based on the information on the at least one mark to perform a selection of an energy-per-unit-area range from a first energy range and a second energy range. The selection may vary as a function of time during a single process stage from start to finish. The first energy range and the second energy range may be predetermined ranges, which are known because they depend on the material of the solid material 10 of vegetable fibers. The selection is based on the at least one mark each requiring at least one energy-per-unit-area range. Energy of the laser beam 30 per surface area of the solid material of the vegetable fibers 10 may be based on control parameters of the laser 100 and/or the laser beam directing apparatus 102 such as travelling speed of the laser beam 30, power and frequency of pulsation of the laser 100 (the laser may also output the optical radiation continuously). Energy of the laser beam 30 per surface area of the solid material of the vegetable fibers 10 may be based on hatching distance and their angle with respect to representation 40 or a sub-feature of the representation 40.

The first energy range for the laser beam 30 causes the solid material 10 of vegetable fibers to become visibly darker than the natural hue in response to interaction with the laser beam 30 and the second energy range causes the solid material 10 of vegetable fibers to become visibly lighter than the natural hue in response to interaction with the laser beam 30. That is, the change to visibly darker or lighter hue takes place at an area hit by the laser beam 30 and it is caused by the laser beam 30. The change to visibly darker can be considered to mean that a ratio of the visible light reflected from the solid material 10 of vegetable fibers with respect to the visible light directed to it becomes lower. Correspondingly, the change to visibly lighter can be considered to mean that a ratio of the visible light reflected from the solid material 10 of vegetable fibers with respect to the visible light directed to it becomes higher. It can be considered that brightness of the surface of the solid material of vegetable fibers 10 changes.

The laser beam directing apparatus 102 causes the laser beam 30 to travel over the solid material 10 of vegetable fibers in response to the control by the controller 104. The travelling of the laser beam 30 is based on the at least one mark for forming the representation 40 of said at least one mark on a surface of the solid material 10 of vegetable fibers with the selected at least one energy-per-unit-area range in the single process stage from start to finish.

A process cycle can be defined as a single process phase or stage that completes a single manufacturing operation, from start to finish, meaning that a product passes through the single stage of its production. In this document the single stage of production includes formation of visible marks on the solid material 10 made of vegetable fibers of natural hue.

The single process stage can be understood to mean that once the program, which causes the at least one desired mark that is to be transferred to the solid material of vegetable fibers 10, is triggered to start, it continues without a break till the end of the program and all of the at least one desired mark is replicated on the solid material of vegetable fibers 10 in a continuous manner.

It may be considered that the natural hue is caused by lignin without limiting to this. The vegetable fibers may comprise only virgin fibers, only recycled fibers or their combination. The vegetable fibers may comprise only wood fibers, only fibers from at least one other plant or their combination. The natural hue means that the fibers are not bleached or they are not fully bleached. Bleaching is typically performed chemically. That the fibers are not fully bleached may mean that all the fibers have been in a process causing bleaching but the process has only lightened the brownish color of the natural hue but not fully removed it. That is, a substantial part of the natural hue has remained. Alternatively or additionally, the natural hue may mean that a part of the fibers, which means less than all fibers, have been partially or fully bleached while another part of the fibers have not been bleached at all and they have the full natural hue. That the representation 40 is visible means that the representation 40 is seen with a naked eye of a human being in illumination of visible light. According to a general concept, the visible light means one or more optical bands of electromagnetic radiation within a range from about 400 nm to about 750 nm.

The wavelength of the carbon dioxide laser 100 may be about 10 600 nm ± about 2 000 nm. In an embodiment, the controller 104 may control the wavelength of the laser 100 with respect to the natural hue and/or composition of the solid material 10 of vegetable fibers. Additionally or alternatively, the controller 104 may control the wavelength of the laser 100 with respect to at least one mark that is to be transferred on a surface of the solid material 10 of vegetable fibers.

In an embodiment, the laser beam 30 may be made to travel over the solid material 10 of vegetable fibers by moving the laser 100 with respect to the solid material 10 of vegetable fibers. The laser 100 may be moved by an actuator, which may comprise electric, pneumatic or hydraulic motors, for example.

In an embodiment, the laser beam 30 may be made to travel over the solid material 10 of vegetable fibers by moving the solid material 10 of vegetable fibers with respect to the laser 100. The solid material 10 of vegetable fibers may be moved by an actuator, which may comprise electric, pneumatic or hydraulic mover(s)/motor(s), conveyor belt, for example. In an example, the actuator may be a roll-to-roll system. A person skilled in the art is familiar with these kinds of movement arrangements, *per se.*

In an embodiment an example of which is illustrated in Fig. 2, the laser beam directing apparatus 104 may comprise at least one laser beam deflector 50. From this on the at least one laser beam deflector 50 is called the laser beam deflector 50, for simplicity. The carbon dioxide laser 100 may direct the laser beam 30 to the laser beam deflector 50, which deflects the laser beam 30 to a marking area 20 which is meant to have the solid material 10 of vegetable fibers with natural hue for forming the representation 40 of the at least one mark of the one or more marks thereon.

The controller 104 may then control the laser beam deflector 50 and/or the carbon dioxide laser 10 based on the information on the at least one mark to perform the selection of an energy-per-unit-area range from the first energy range for a laser beam 30 and the second energy range.

The laser beam deflector 50 may cause the laser beam 30 to travel over the solid material 10 of vegetable fibers in response to the control by the controller 104. The laser beam deflector 50 makes the laser beam 30 to travel on the surface of the solid material of vegetable fibers 10 in order to replicate the at least one mark as the representation 40 to the surface.

The laser beam deflector 50 may comprise a first direction reflector 60 and a second direction reflector 70 which may rotate by turning with respect to their rotation axes. The first direction X and the second direction Y may be orthogonal and they can be parallel to unit vectors of a Cartesian coordinate system. The reflectors 60 and 70 may comprise silicon, molybdenum, nickel copper alloy (NiCu), aluminum and/or copper mirrors, for example, without limiting to these. The reflectors 60, 70 may covered with gold or silver, for example. The first direction reflector 60 receives the laser beam 30 and deflects it in the first direction toward the second direction reflector 60 that then deflects the laser beam 30 in the second direction and directs the laser beam 30 toward the marking area 20 where the solid material 10 of vegetable fibers is. When the first and second reflector 60, 70 rotate round their rotational axes 80 and 90 they cause the laser beam 30 to travel over the solid material 10 of the vegetable fibers according to and following a geometrical shape defined the at least one mark, the geometrical shape resulting in the representation 40 on the solid material 10 of the vegetable fibers.

The first and second reflectors 60, 70 may be rotated round their rotation axes using actuators 80, 90. The actuators 80, 90, in turn, may comprise electric, pneumatic or hydraulic motors, for example.

Additionally or alternatively, the laser beam deflector 50 may comprise an acousto-optic modulator and/or magneto-optic modulator for making the laser beam 30 to travel on the surface of the solid material of vegetable fibers 10 in order to replicate the at least one mark as the representation to the surface.

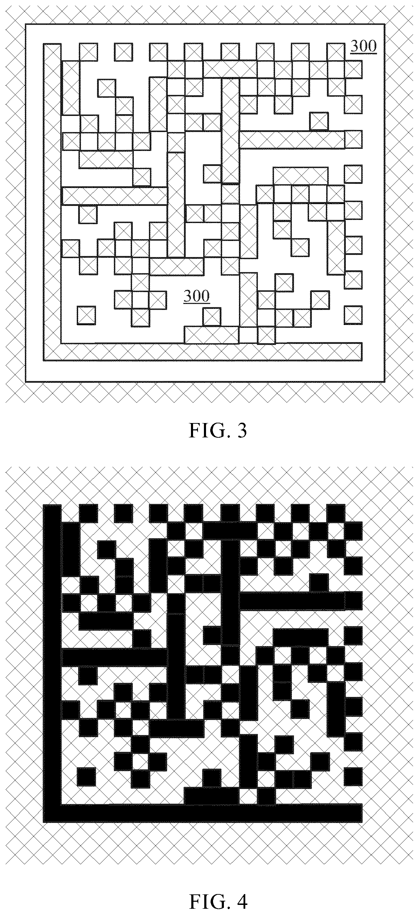

In an embodiment examples of which are illustrated in Figs 3, 4, 5, 6, 7 and 8, the mark comprises information on one or more graphical patterns, one or more alphanumerical signs and/or writing symbols of the representation 40. In Figs 3, 4 and 5 examples of representations 40 of a data matrix are presented. In Figs 3, 4, 5, 6, 7 and 8, the natural hue is shown with hatched lines, white area is bleached visibly lighter than that of the natural hue by the laser beam 30, and the black area is made visibly darker than that of the natural hue by the laser beam 30.

In an embodiment, the controller 104 may control the carbon dioxide laser 100 and/or the laser beam directing apparatus 102 to direct the laser beam 30 within an energy range about 0.5 J/cm² and about 30 J/cm², without limiting to these values. Here the energy range may refer to a fixed energy range or an average energy range. The energy of the laser beam 30 at the surface of the solid material 10 of vegetable fibers depends in general on both a travelling speed of the laser beam 30 caused by the laser beam directing apparatus 102 and the optical power of the laser beam 30. Additionally, the energy range or values may depend on the type or quality of the solid material 10 of the vegetable fibers.

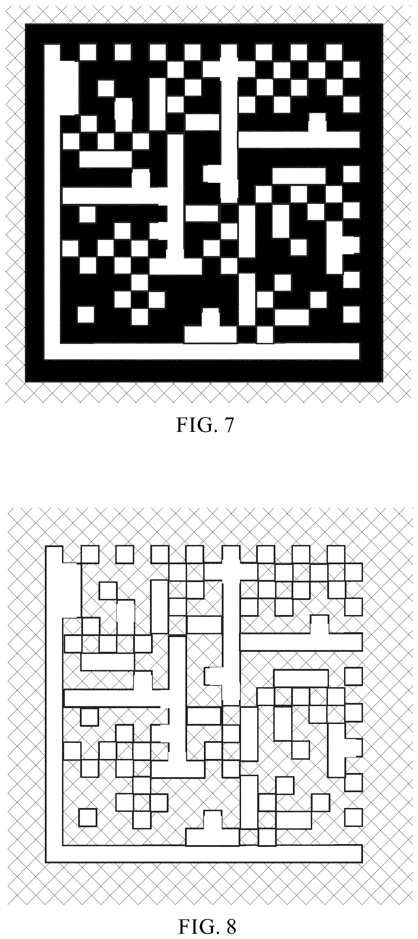

In an embodiment an example of which is illustrated in Figs. 3 and 8, only the second energy range, which causes the solid material 10 of vegetable fibers to become visibly lighter than the natural hue, may be selected for forming the representation 40 defined by a combination of areas, where one area has the natural hue and another area is visibly lighter than the natural hue.

In an embodiment, illustrated in Fig. 3, the background 300, which is at least the size of the one or more graphical patterns, one or more alphanumerical signs and/or writing symbols of the representation 40, has been made visibly lighter that the natural hue, and the graphical data matrix 302 is presented with the natural hue on the background 300. That is, the laser beam 30 has interacted with the solid material 10 of the vegetable fibers only in the area of the background 300.

In an embodiment, illustrated in Fig. 8, the laser beam 30 has been directed to only an area of the one or more graphical patterns, one or more alphanumerical signs and/or writing symbols of the representation 40, which is a data matrix in Fig. 8.

In an embodiment, illustrated in Figs 3 and 8, the controller 104 may control the carbon dioxide laser 100 and/or the laser beam directing apparatus 104 to direct the laser beam 30 of the second energy range within an energy range about 0.5 J/cm² and about 4.5 J/cm², without limiting to these values, in order to cause the solid material 10 of the vegetable fibers to become visibly lighter than the natural hue of the solid material 10 of the vegetable fibers (see Figs. 3, 5, 7 and 8). Here the energy range may refer to a fixed energy range or an average energy range. Additionally, the energy range or values may depend on the type or quality of the solid material 10 of the vegetable fibers.

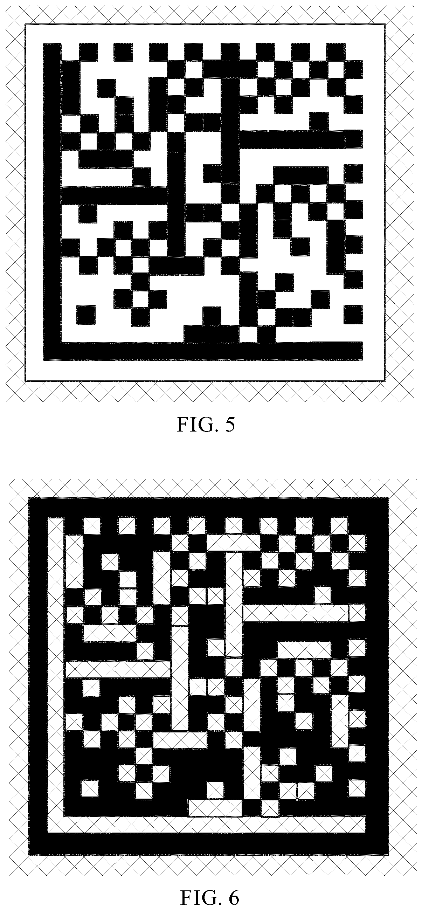

In an embodiment, illustrated in Figs 4 and 6, the controller 104 is configured to select only the first energy range for forming the representation 40 defined by a combination of areas, one having the natural hue and another being visibly darker than the natural hue.

In an embodiment of Fig. 4, the laser beam 30 has been directed to only an area of the one or more graphical patterns, one or more alphanumerical signs and/or writing symbols of the representation 40, which is a data matrix in Fig. 4.

In an embodiment of Fig. 6, the laser beam 30 has been directed to only an area of the background of the representation 40, and the area of the one or more graphical patterns, one or more alphanumerical signs and/or writing symbols of the representation 40 is left to have the natural hue. That is, the data matrix has the natural hue in Fig. 6.

In an embodiment, the controller 104 may control the carbon dioxide laser 100 and/or the laser beam directing apparatus 102 to direct a laser beam of the first energy range within an energy range about 4.5 J/cm² and about 30 J/cm², without limiting to these values, in order to cause the solid material 10 of the vegetable fibers to become darker than the natural hue of the solid material 10 of the vegetable fibers (see Figs. 4, 5, 6 and 7). Here the energy range may refer to a fixed energy range or an average energy range. Additionally, the energy range or values may depend on the type or quality of the solid material 10 of the vegetable fibers.

In an embodiment, the optical power of the carbon dioxide laser 100 may be constant or controllably varying and the controller 104 may control the travelling speed of the laser beam 30 for performing the selection from the first energy range and the second energy range. In order to cause the solid material 10 of the vegetable fibers to become visibly lighter than the natural hue, the travelling speed of the laser beam 30 should be greater than the travelling speed for making the solid material 10 of the vegetable fibers visibly darker than the natural hue.

In an embodiment, the solid material 10 of vegetable fibers may move and the laser beam directing apparatus 102 may cause the laser beam 30 to travel over the moving solid material 10 of vegetable fibers in response to the control by the controller 104 based on the at least one mark and information on the movement of the solid material 10 of vegetable fibers. That is, the marking of the solid material 10 of vegetable fibers may be performed on the fly. The solid material 10 of vegetable fibers may move at a constant speed and the controller 104 may have the information of the constant speed which enables the controller 104 to regulate the speed of the laser beam 30 suitably with respect to the speed of the solid material 10 of vegetable fibers.

In an embodiment, the controller 104 may control also the speed of the solid material 10 of vegetable fibers and the speed of the solid material 10 of vegetable fibers may be constant or variable. As the information of the speed of the solid material 10 of vegetable fibers is available to the controller 104, it may regulate the speed of the laser beam 30 suitably with respect to the speed of the solid material 10 of vegetable fibers. In this manner, it is possible to move the laser beam at a desired or constant speed with respect to the solid material 10 of vegetable fibers in any direction on the surface of the solid material 10 of vegetable fibers. That means that the movement of the laser beam with respect to the solid material 10 of vegetable fibers can be kept the same in a direction parallel to the movement of the solid material 10 of vegetable fibers and in the direction vertical to it and in any direction therebetween. A person skilled in the art is familiar with this kind of speed control, *per se.*

In an embodiment, the controller 104 may receive the information on the speed of the solid material 10 of vegetable fibers from an external source, and based on the received information the controller 104 may regulate the speed of the laser beam 30 suitably with respect to the speed of the solid material 10 of vegetable fibers. As already mentioned, a person skilled in the art is familiar with this kind of regulation of speed, *per se.*

In an embodiment, the controller 104 may set the first and/or second energy range for the laser beam 30 based on the properties and/or composition of the solid material 10 of vegetable fibers, for example. When the properties and/or composition of the solid material 10 of vegetable fibers changes, the controller 104 may also increase or decrease energy of the first and/or second energy ranges. Properties may be, for example, natural hue and/or humidity of the solid material 10 of vegetable fibers without limiting to these. Here the energy range may refer to a fixed energy range or an average energy range.

The marking apparatus comprises at least one optical arrangement 74 for forming the laser beam 30. From this on the at least one optical arrangement 74 is called the optical arrangement 74, for simplicity. In an embodiment, the carbon dioxide laser 100 comprises the optical arrangement 74. In an embodiment, the optical arrangement 74 is related to the resonator cavity of the carbon dioxide laser 100.

In an embodiment, the energy per unit area of the laser beam 30 may be increased by making a diameter of the laser beam 30 smaller by causing convergence to the laser beam 30. Alternatively, the energy per unit area of the laser beam 30 may be decreased by making a diameter of the laser beam 30 larger by causing divergence to the laser beam 30.

In addition to the optical components integrated within or with the carbon dioxide laser 100, the at least one optical arrangement 74 of the marking apparatus may have additional and separate optical components for manipulating the laser beam 30.

In an embodiment an example of which is illustrated in Fig. 1, the solid material 10 of vegetable fibers may move and the laser beam directing apparatus 102 may receive information on the moving solid material 10 of vegetable fibers. The controller 104 may control, in response to the information on the movement of the solid material 10 of vegetable fibers, the carbon dioxide laser 100 to output the laser beam 30 with suitable energy-per-unit-area range. That is, the marking of the solid material 10 of vegetable fibers may be performed on the fly. The solid material 10 of vegetable fibers may move at a constant speed and the controller 104 may have the information of the constant speed which enables the controller 104 to regulate the carbon dioxide laser 100. In this manner, the laser beam 30 does not need to be optically deflected although it may also be deflected. By controlling the energy-per-unit-area range as a function of time it is possible to transfer lines of various lengths and darkness onto the solid material 10 of vegetable fibers. The laser energy per unit area should thus be controlled, and the carbon dioxide laser 100 may be switched on and off for transferring lines on the surface of the solid material 10 of vegetable fibers. With deflection also other figures than lines parallel to the movement of the solid material 10 of vegetable fibers may be transferred onto the solid material 10 of vegetable fibers.

As illustrated in Fig. 2, the controller 104 may control at least one optical arrangement 74 which comprises at least one optical component of the optical arrangement that may cause divergence and/or convergence. The at least one optical component may comprise at least one lens that forms a real image and/or at least one lens that forms a virtual image. The diameter of the laser beam 30 may be altered by one of the presented manner or by a combination of the presented manners.

In an embodiment, the marking apparatus may comprise a user interface 108, and the controller 104 may present information on advancement of the formation of the representation 40 on the surface of the solid material 10 of vegetable fibers. A representation may be divided into a plurality of sub-features which may be letters of alphabets or writing character such as kanji-signs, hiragana signs, katakana-signs, Arab, Korean, (Indian) devanagari, Burmese writing symbols, or numbers, any of their combination or the like, for example. Alternatively or additionally, the sub-features may be geometrical figures such as lines, curves or polygons, any of their combination or the like, for example. When the controller 104 has the information how many sub-features are to be formed, the monitoring of the advancement may be based on a comparison how many of the sub-features have already been formed and how many still needs to be formed on the surface of the surface of the solid material 10 of vegetable fibers.

In an embodiment, the monitoring of the advancement may be based on time used for formation of a representation. The controller 104 may have predetermined information on a duration how long it takes to transfer a sub-feature or a whole representation to the surface of the surface of the solid material 10 of vegetable fibers. When a marking is on-going the controller 104 may monitor the time used for the formation of the representation. The percentage of used time for the formation or the representation with respect to the predetermined information may be a suitable measure of the advancement.

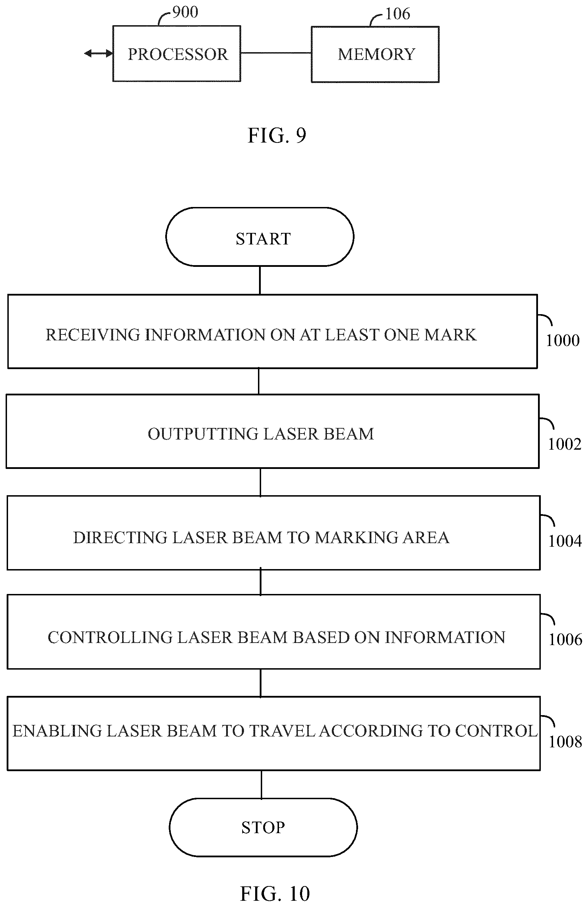

In an embodiment an example of which is illustrated in Fig. 9, the controller 104 comprises one or more processors 900. The one or more memories 106 includes a computer program code. The one or more memories 106 and the computer program code may, with the one or more processors 900, cause the controller 104 to control the laser beam directing apparatus 102 and/or the carbon dioxide laser 100 to perform the selection of the energy-per-unit-area range from the first energy range and the second energy range based on the at least one mark.

The one or more memories 106 and the computer program code may, with the one or more processors 900, cause the controller 104 to cause the laser beam directing apparatus 102 to cause the laser beam 30 to travel over the solid material 10 of vegetable fibers based on geometry of the at least one mark.

It is possible to mark one side, any side, all sides or some sides of the solid material 10 of the vegetable fibers. That may be done without moving the laser 100 and/or the solid material 10 of the vegetable fibers when the laser beam deflector 50 is utilized.

Figure 10 illustrates an example of a marking method. The method steps may be performed in the following order. However, the order may also be different. In step 1000, at least one controller 104 receives information on the at least one mark from one or more memories 106.

In step 1002, a laser beam 30 is output by at least one carbon dioxide laser 100.

In step 1004, the laser beam 30 is directed, by a laser beam directing apparatus 102, to a marking area 20 which is configured to have solid material 10 of vegetable fibers with natural hue for forming a representation 40 of at least one mark of the one or more marks thereon.

In step 1006, the at least one controller 104 controls the laser beam directing apparatus 102 based on the information on the at least one mark and/or the at least one carbon dioxide laser 100 to perform a selection of an energy-per-unit-area range from a first energy range for a laser beam 30 that is configured to cause the solid material 10 of vegetable fibers to become visibly darker than the natural hue in response to interaction with the laser beam 30 and a second energy range that is configured to cause the solid material 10 of vegetable fibers to become visibly lighter than the natural hue in response to interaction with the laser beam 30. The selection is based on the at least one mark each requiring at least one energy-per-unit-area range.

In step 1008, the laser beam directing apparatus 102 causes the laser beam 30 to travel over the solid material 10 of vegetable fibers in response to the control by the at least one controller 104 based on the at least one mark for forming the representation 40 of the at least one mark on a surface of the solid material 10 of vegetable fibers based on the travelling of the laser beam 30 with the selected at least one energy-per-unit-area range over the solid material 10 of vegetable fibers in a single process stage from start to finish.

The marking method shown in Figure 10 may be implemented as a logic circuit solution or computer program. The computer program may be placed on a computer program distribution means for the distribution thereof. The computer program distribution means is readable by a data processing device, and it encodes the computer program commands, carries out the measurements and optionally controls the processes on the basis of the measurements.

The marking apparatus may comprise without going to basic prior art details which the person skilled in the art is familiar with optical galvanometer(s), servo motor(s), step motor(s), rotating polygon mirror(s) (mirror(s), see Fig. 2), beam expander(s), focusing optic(s), dynamic Z-axis control etc.

The software for the marking method may contain CAD (Computer Aided Design) features that make it a tool for designing marking templates for different purposes. In addition to basic shapes, marking can contain bitmap graphics, vector graphics, texts, barcodes and 2D-codes. The software may driven by a PC (Personal Computer) that controls the marking apparatus. That is, the at least one controller 104 shown in Fig. 1 may be at least partly in the PC. Alternatively, the software may be driven directly in the at least one controller 104 that is integrated with the laser 100. Thus, the PC, *per se,* may not be necessary.

The marks and the control parameters of the at least one laser 100 may be stored in the at least one memory 106.

The computer program may be distributed using a distribution medium which may be any medium readable by the at least one controller. The medium may be a program storage medium, a memory, a software distribution package, or a compressed software package. In some cases, the distribution may be performed using at least one of the following: a near field communication signal, a short distance signal, and a telecommunications signal.

It will be obvious to a person skilled in the art that, as technology advances, the inventive concept can be implemented in various ways. The invention and its embodiments are not limited to the example embodiments described above but may vary within the scope of the claims.

## Claims

1. A marking apparatus, comprising
one or more memories (108) including information on one or more marks,
at least one carbon dioxide laser (100), which is configured to output a laser beam (30),
at least one optical arrangement (74) for focusing the laser beam (30),
at least one laser beam directing apparatus (102), the marking apparatus being **characterized in that** the at least one laser beam directing apparatus (102) is configured to direct the laser beam (30) to a marking area (20) which is configured to have a solid material (10) of vegetable fibers with natural hue for forming a representation (40) of the at least one mark of the one or more marks thereon, and that the marking apparatus further comprises
at least one controller (104) configured to receive information on the at least one mark from the one or more memories (108), control the at least one laser beam directing apparatus (102), the at least one optical arrangement (74) and/or the at least one carbon dioxide laser (100) based on the information on the at least one mark to perform a selection of an energy-per-unit-area range from a first energy range for a laser beam (30) that is configured to cause the solid material (10) of vegetable fibers to become visibly darker than the natural hue in response to interaction with the laser beam (30) and a second energy range that is configured to cause the solid material (10) of vegetable fibers to become visibly lighter than the natural hue in response to interaction with the laser beam (30), the selection being based on the at least one mark each requiring at least one energy-per-unit-area range; and
the at least one laser beam directing apparatus (102) is configured to enable the laser beam (30) to travel over the solid material (10) of vegetable fibers in response to the control by the at least one controller (104) based on the at least one mark for forming the representation (40) of the at least one mark on a surface of the solid material (10) of vegetable fibers with the selected at least one energy-per-unit-area range in a single process stage from start to finish.

2. The apparatus of claim 1, **characterized in that** the laser beam directing apparatus (104) comprises at least one laser beam deflector (50);
each of the at least one carbon dioxide laser (100) is configured to direct the laser beam (30) to the at least one laser beam deflector (50), which is configured to deflect the laser beam (30) to a marking area (20) which is configured to receive the solid material (10) of vegetable fibers with natural hue for forming the representation (40) of at least one mark of the one or more marks thereon;
the at least one controller (104) configured to control the at least one laser beam deflector (50) the at least one optical arrangement (74), and/or the at least one carbon dioxide laser (10) based on the information on the at least one mark to perform the selection of an energy-per-unit-area range from the first energy range for a laser beam (30) and the second energy range; and
the at least one laser beam deflector (50) is configured to cause the laser beam (30) to travel over the solid material (10) of vegetable fibers in response to the control by the at least one controller (104).

3. The apparatus of claim 1, **characterized in that** the mark comprises information on one or more graphical patterns, one or more alphanumerical signs and/or writing symbols of the representation (40).

4. The apparatus of claim 1, **characterized in that** the at least one controller (104) configured to control the at least one carbon dioxide laser (100), the at least one optical arrangement (74) and/or the at least one laser beam directing apparatus (102) to direct a laser beam within an energy range 0.5 J/cm² and 30 J/cm², fixed or average, the energy of the laser beam (30) at the surface of the solid material (10) of vegetable fibers depending on a travelling speed of the laser beam (30) caused by at least one the laser beam directing apparatus (102), an optical power of the laser beam (30), an optical beam spot size and a hatching distance.

5. The apparatus of claim 1, **characterized in that** only the second energy range is selected for forming the representation (40) defined by a combination of areas, one having the natural hue and another being visibly lighter.

6. The apparatus of claim 1, 4 or 5, **characterized in that** the at least one controller (104) configured to control the at least one carbon dioxide laser (100) and/or the at least one laser beam directing apparatus (104) to direct the laser beam (30) of the second energy range within an energy range 0.5 J/cm² and 4.5 J/cm², fixed or average.

7. The apparatus of claim 1, **characterized in that** the at least one controller (104) is configured to select only the first energy range for forming the representation (40) defined by a combination of areas, one having the natural hue and another being visibly darker.

8. The apparatus of claim 1, 4 or 7, **characterized in that** the at least one controller (104) is configured to control the at least one carbon dioxide laser (100), the at least one optical arrangement (74) and/or the at least one laser beam directing apparatus (102) to direct a laser beam of the first energy range within an energy range 4.5 J/cm² and 30 J/cm², fixed or average.

9. The apparatus of claim 1, 6 or 8, **characterized in that** the optical power of the carbon dioxide laser (100) is constant or controllably varying and the at least one controller (104) is configured to control the travelling speed of the laser beam (30) for performing the selection from the first energy range and the second energy range.

10. The apparatus of claim 1, **characterized in that** the solid material (10) of vegetable fibers is configured to move and the at least one laser beam directing apparatus (102) is configured to cause the laser beam (30) to travel over the moving solid material (10) of vegetable fibers in response to the control by the at least one controller (104) based on the at least one mark and the movement of the solid material (10) of vegetable fibers.

11. The apparatus of claim 1, **characterized in that** the at least one controller (104) is configured to set the first and/or second energy range for the laser beam (30) based on the natural hue and/or composition of the solid material (10) of vegetable fibers.

12. The apparatus of claim 1, **characterized in that** the at least one controller (104) is configured to set the first and/or second energy range for a laser beam (30) based on the size and shape of the representation (40).

13. The apparatus of claim 1, **characterized in that** the apparatus comprises a user interface (108) and the at least one controller (104) is configured to present information on advancement of the formation of the representation (40) on the surface of the solid material (10) of vegetable fibers.

14. The apparatus of claim 1, **characterized in that** the at least one controller (104) comprises one or more processors (900); the one or more memories (106) includes computer program code; and
the one or more memories (106) and the computer program code are configured to, with the one or more processors (900), cause the at least one controller at least to:
control the at least one laser beam directing apparatus (102), the at least one optical arrangement (74) and/or the at least one carbon dioxide laser (100) for performing the selection of the energy-per-unit-area range from the first energy range and the second energy range based on the at least one mark for causing the laser beam (30) to travel over the solid material (10) of vegetable fibers with the selected energy-per-unit-area ranges.

15. A marking method comprising the following steps:
receiving (1000), by at least one controller (104), information on the at least one mark from one or more memories (106);
outputting (1002) a laser beam (30), by at least one carbon dioxide laser (100);
directing (1004), by at least one laser beam directing apparatus (102), the laser beam (30) to a marking area (20),
the marking method being **characterized in that** the marking area is configured to have solid material (10) of vegetable fibers with natural hue for forming a representation (40) of at least one mark of the one or more marks thereon; and being further **characterized by**
controlling (1006), by the at least one controller (104), the at least one laser beam directing apparatus (102), the at least one optical arrangement (74) and/or the at least one carbon dioxide laser (100) based on the information on the at least one mark to perform a selection of an energy-per-unit-area range from a first energy range for a laser beam (30) that is configured to cause the solid material (10) of vegetable fibers to become visibly darker than the natural hue in response to interaction with the laser beam (30) and a second energy range that is configured to cause the solid material (10) of vegetable fibers to become visibly lighter than the natural hue in response to interaction with the laser beam (30), the selection being based on the at least one mark each requiring at least one energy-per-unit-area range; and
enabling (1008), by the at least one laser beam directing apparatus (102), the laser beam (30) to travel over the solid material (10) of vegetable fibers in response to the control by the at least one controller (104) based on the at least one mark for forming the representation (40) of the at least one mark on a surface of the solid material (10) of vegetable fibers based on the travelling of the laser beam (30) with the selected at least one energy-per-unit-area range over the solid material (10) of vegetable fibers in a single process stage from start to finish.

## Patentansprüche

1. Markierungsvorrichtung, umfassend:
einen oder mehrere Speicher (108), die Informationen über eine oder mehrere Markierungen umfassen,
mindestens einen Kohlendioxidlaser (100), der dazu ausgestaltet ist, einen Laserstrahl (30) abzugeben,
mindestens eine optische Anordnung (74) zum Fokussieren des Laserstrahls (30),
mindestens eine Laserstrahl-Lenkvorrichtung (102), wobei die Markierungsvorrichtung **dadurch gekennzeichnet ist, dass** die mindestens eine Laserstrahl-Lenkvorrichtung (102) dazu ausgestaltet ist, den Laserstrahl (30) zu einer Markierungsfläche (20) zu lenken, die dazu ausgestaltet ist, ein massives Material (10) aus Pflanzenfasern mit natürlichem Farbton zum Bilden einer Darstellung (40) der mindestens einen Markierung der einen oder mehreren Markierungen darauf aufzuweisen, und dass die Markierungsvorrichtung ferner umfasst
mindestens eine Steuereinrichtung (104), die dazu ausgestaltet ist, Informationen über die mindestens eine Markierung von dem einen oder den mehreren Speichern (108) zu empfangen, die mindestens eine Laserstrahl-Lenkvorrichtung (102), die mindestens eine optische Anordnung (74) und/oder den mindestens einen Kohlendioxidlaser (100) basierend auf den Informationen über die mindestens eine Markierung zu steuern, um eine Auswahl eines Energie-pro-Flächeneinheit-Bereichs von einem ersten Energiebereich für einen Laserstrahl (30), der dazu ausgestaltet ist, zu veranlassen, dass das massive Material (10) aus Pflanzenfasern als Reaktion auf Interaktion mit dem Laserstrahl (30) sichtbar dunkler wird als der natürliche Farbton, und einem zweiten Energiebereich durchzuführen, der dazu ausgestaltet ist, zu veranlassen, dass das massive Material (10) aus Pflanzenfasern als Reaktion auf Interaktion mit dem Laserstrahl (30) sichtbar heller wird als der natürliche Farbton, wobei die Auswahl auf der mindestens einen Markierung basiert, die jeweils mindestens einen Energie-pro-Flächeneinheit-Bereich erfordert; und
die mindestens eine Laserstrahl-Lenkvorrichtung (102) dazu ausgestaltet ist, es dem Laserstrahl (30) als Reaktion auf die Steuerung durch die mindestens eine Steuereinrichtung (104) basierend auf der mindestens einen Markierung zu ermöglichen, sich über das massive Material (10) aus Pflanzenfasern fortzubewegen, um die Darstellung (40) der mindestens einen Markierung auf einer Oberfläche des massiven Materials (10) aus Pflanzenfasern mit dem ausgewählten mindestens einen Energie-pro-Flächeneinheit-Bereich in einer einzigen Prozessstufe von Anfang bis Ende zu bilden.

2. Vorrichtung nach Anspruch 1, **dadurch gekennzeichnet, dass** die Laserstrahl-Lenkvorrichtung (104) mindestens einen Laserstrahldeflektor (50) umfasst;
jeder von dem mindestens einen Kohlendioxidlaser (100) dazu ausgestaltet ist, den Laserstrahl (30) zu dem mindestens einen Laserstrahldeflektor (50) zu lenken, der dazu ausgestaltet ist, den Laserstrahl (30) zu einer Markierungsfläche (20) abzulenken, die dazu ausgestaltet ist, das massive Material (10) aus Pflanzenfasern mit natürlichem Farbton zum Bilden der Darstellung (40) von mindestens einer Markierung der einen oder den mehreren Markierungen darauf aufzunehmen;
die mindestens eine Steuereinrichtung (104), die dazu ausgestaltet ist, den mindestens einen Laserstrahldeflektor (50), die mindestens eine optische Anordnung (74) und/oder den mindestens einen Kohlendioxidlaser (10) basierend auf den Informationen über die mindestens eine Markierung zu steuern, um die Auswahl eines Energie-pro-Flächeneinheit-Bereichs von dem ersten Energiebereich für einen Laserstrahl (30) und dem zweiten Energiebereich durchzuführen; und
der mindestens eine Laserstrahldeflektor (50) dazu ausgestaltet ist, zu veranlassen, dass der Laserstrahl (30) sich als Reaktion auf die Steuerung durch die mindestens eine Steuereinrichtung (104) über das massive Material (10) aus Pflanzenfasern fortbewegt.

3. Vorrichtung nach Anspruch 1, **dadurch gekennzeichnet, dass** die Markierung Informationen über ein oder mehrere grafische Muster, ein oder mehrere alphanumerische Zeichen und/oder Schreibsymbole der Darstellung (40) umfasst.

4. Vorrichtung nach Anspruch 1, **dadurch gekennzeichnet, dass** die mindestens eine Steuereinrichtung (104), die dazu ausgestaltet ist, den mindestens einen Kohlendioxidlaser (100), die mindestens eine optische Anordnung (74) und/oder die mindestens eine Laserstrahl-Lenkvorrichtung (102) zu steuern, um einen Laserstrahl innerhalb eines festen oder durchschnittlichen Energiebereichs von 0,5 J/cm² und 30 J/cm² zu lenken, wobei die Energie des Laserstrahls (30) an der Oberfläche des massiven Materials (10) aus Pflanzenfasern von einer Fortbewegungsgeschwindigkeit des Laserstrahls (30), die von der mindestens einen Laserstrahl-Lenkvorrichtung (102) veranlasst wird, einer optischen Leistung des Laserstrahls (30), einer Punktgröße des optischen Strahls und einem Hatch-Abstand abhängt.

5. Vorrichtung nach Anspruch 1, **dadurch gekennzeichnet, dass** nur der zweite Energiebereich zum Bilden der Darstellung (40) ausgewählt wird, die durch eine Kombination von Flächen definiert ist, von denen eine den natürlichen Farbton aufweist und eine andere sichtbar heller ist.

6. Vorrichtung nach Anspruch 1, 4 oder 5, **dadurch gekennzeichnet, dass** die mindestens eine Steuereinrichtung (104) dazu ausgestaltet ist, den mindestens einen Kohlendioxidlaser (100) und/oder die mindestens eine Laserstrahl-Lenkvorrichtung (104) zu steuern, um den Laserstrahl (30) des zweiten Energiebereichs innerhalb eines festen oder durchschnittlichen Energiebereichs von 0,5 J/cm² und 4,5 J/cm² zu lenken.

7. Vorrichtung nach Anspruch 1, **dadurch gekennzeichnet, dass** die mindestens eine Steuereinrichtung (104) dazu ausgestaltet ist, nur den ersten Energiebereich zum Bilden der Darstellung (40) auszuwählen, die durch eine Kombination von Flächen definiert ist, von denen eine den natürlichen Farbton aufweist und eine andere sichtbar dunkler ist.

8. Vorrichtung nach Anspruch 1, 4 oder 7, **dadurch gekennzeichnet, dass** die mindestens eine Steuereinrichtung (104) dazu ausgestaltet ist, den mindestens einen Kohlendioxidlaser (100), die mindestens eine optische Anordnung (74) und/oder die mindestens eine Laserstrahl-Lenkvorrichtung (102) zu steuern, um einen Laserstrahl des ersten Energiebereichs innerhalb eines festen oder durchschnittlichen Energiebereichs von 4,5 J/cm² und 30 J/cm² zu lenken.

9. Vorrichtung nach Anspruch 1, 6 oder 8, **dadurch gekennzeichnet, dass** die optische Leistung des Kohlendioxidlasers (100) konstant oder steuerbar veränderlich ist und die mindestens eine Steuereinrichtung (104) dazu ausgestaltet ist, die Fortbewegungsgeschwindigkeit des Laserstrahls (30) zum Durchführen der Auswahl von dem ersten Energiebereich und dem zweiten Energiebereich zu steuern.

10. Vorrichtung nach Anspruch 1, **dadurch gekennzeichnet, dass** das massive Material (10) aus Pflanzenfasern dazu ausgestaltet ist, sich zu bewegen, und die mindestens eine Laserstrahl-Lenkvorrichtung (102) dazu ausgestaltet ist, zu veranlassen, dass der Laserstrahl (30) sich über das sich bewegende massive Material (10) aus Pflanzenfasern als Reaktion auf die Steuerung durch die mindestens eine Steuereinrichtung (104) basierend auf der mindestens einen Markierung und der Bewegung des massiven Materials (10) aus Pflanzenfasern fortbewegt.

11. Vorrichtung nach Anspruch 1, **dadurch gekennzeichnet, dass** die mindestens eine Steuereinrichtung (104) dazu ausgestaltet ist, den ersten und/oder zweiten Energiebereich für den Laserstrahl (30) basierend auf dem natürlichen Farbton und/oder der Zusammensetzung des massiven Materials (10) aus Pflanzenfasern einzustellen.

12. Vorrichtung nach Anspruch 1, **dadurch gekennzeichnet, dass** die mindestens eine Steuereinrichtung (104) dazu ausgestaltet ist, den ersten und/oder zweiten Energiebereich für einen Laserstrahl (30) basierend auf der Größe und Form der Darstellung (40) einzustellen.

13. Vorrichtung nach Anspruch 1, **dadurch gekennzeichnet, dass** die Vorrichtung eine Benutzeroberfläche (108) umfasst und die mindestens eine Steuereinrichtung (104) dazu ausgestaltet ist, Informationen über den Fortschritt der Bildung der Darstellung (40) auf der Oberfläche des massiven Materials (10) aus Pflanzenfasern zu präsentieren.

14. Vorrichtung nach Anspruch 1, **dadurch gekennzeichnet, dass** die mindestens eine Steuereinrichtung (104) einen oder mehrere Prozessoren (900) umfasst; wobei der eine oder die mehreren Speicher (106) Computerprogrammcode umfassen; und
der eine oder die mehreren Speicher (106) und der Computerprogrammcode dazu ausgestaltet sind, mit dem einen oder den mehreren Prozessoren (900) zu bewirken, dass die mindestens eine Steuereinrichtung mindestens:
die mindestens eine Laserstrahl-Lenkvorrichtung (102), die mindestens eine optische Anordnung (74) und/oder den mindestens einen Kohlendioxidlaser (100) zum Durchführen der Auswahl des Energie-pro-Flächeneinheit-Bereichs von dem ersten Energiebereich und dem zweiten Energiebereich basierend auf der mindestens einen Markierung steuert, um zu veranlassen, dass der Laserstrahl (30) sich mit den ausgewählten Energie-pro-Flächeneinheit-Bereichen über das massive Material (10) aus Pflanzenfasern fortbewegt.

15. Markierungsverfahren, das die folgenden Schritte umfasst:
Empfangen (1000), durch mindestens eine Steuereinrichtung (104), von Informationen über die mindestens eine Markierung von einem oder mehreren Speichern (106);
Abgeben (1002) eines Laserstrahls (30) durch den mindestens einen Kohlendioxidlaser (100);
Lenken (1004), durch die mindestens eine Laserstrahl-Lenkvorrichtung (102), des Laserstrahls (30) zu einer Markierungsfläche (20),
wobei das Markierungsverfahren **dadurch gekennzeichnet ist, dass** die Markierungsfläche dazu ausgestaltet ist, massives Material (10) aus Pflanzenfasern mit natürlichem Farbton zum Bilden einer Darstellung (40) mindestens einer Markierung der einen oder mehreren Markierungen darauf aufzuweisen; und ferner **gekennzeichnet ist durch**
Steuern (1006), durch die mindestens eine Steuereinrichtung (104), der mindestens einen Laserstrahl-Lenkvorrichtung (102), der mindestens einen optischen Anordnung (74) und/oder des mindestens einen Kohlendioxidlasers (100) basierend auf den Informationen über die mindestens eine Markierung, um eine Auswahl eines Energie-pro-Flächeneinheit-Bereichs von einem ersten Energiebereich für einen Laserstrahl (30), der dazu ausgestaltet ist, zu veranlassen, dass das massive Material (10) aus Pflanzenfasern als Reaktion auf Interaktion mit dem Laserstrahl (30) sichtbar dunkler wird als der natürliche Farbton, und einem zweiten Energiebereich durchzuführen, der dazu ausgestaltet ist, zu veranlassen, dass das massive Material (10) aus Pflanzenfasern als Reaktion auf Interaktion mit dem Laserstrahl (30) sichtbar heller wird als der natürliche Farbton, wobei die Auswahl auf der mindestens einen Markierung basiert, die jeweils mindestens einen Energie-pro-Flächeneinheit-Bereich erfordert; und
Ermöglichen (1008), durch die mindestens eine Laserstrahl-Lenkvorrichtung (102), des Fortbewegens des Laserstrahls (30) über das massive Material (10) aus Pflanzenfasern als Reaktion auf die Steuerung durch die mindestens eine Steuereinrichtung (104) basierend auf der mindestens einen Markierung, um die Darstellung (40) der mindestens einen Markierung auf einer Oberfläche des massiven Materials (10) aus Pflanzenfasern basierend auf dem Fortbewegen des Laserstrahls (30) mit dem ausgewählten Energie-pro-Flächeneinheit-Bereich über das massive Material (10) aus Pflanzenfasern in einer einzigen Prozessstufe von Anfang bis Ende zu bilden.

## Revendications

1. Appareil de marquage, comprenant
une ou plusieurs mémoires (108) comportant des informations sur une ou plusieurs marques,
au moins un laser à dioxyde de carbone (100) qui est configuré pour émettre un faisceau laser (30),
au moins un agencement optique (74) pour focaliser le faisceau laser (30),
au moins un appareil d'orientation de faisceau laser (102), l'appareil de marquage étant **caractérisé en ce que** l'au moins un appareil d'orientation de faisceau laser (102) est configuré pour diriger le faisceau laser (30) vers une zone de marquage (20) qui est configurée pour avoir un matériau solide (10) de fibres végétales avec une teinte naturelle pour former une représentation (40) de l'au moins une marque des une ou plusieurs marques sur celle-ci, et **en ce que** l'appareil de marquage comprend en outre
au moins un dispositif de commande (104) configuré pour recevoir des informations sur l'au moins une marque à partir des une ou plusieurs mémoires (108), commander l'au moins un appareil d'orientation de faisceau laser (102), l'au moins un agencement optique (74) et/ou l'au moins un laser à dioxyde de carbone (100) sur la base des informations sur l'au moins une marque pour effectuer une sélection d'une plage d'énergie par unité de surface parmi une première plage d'énergie pour un faisceau laser (30) configurée pour faire en sorte que le matériau solide (10) de fibres végétales devienne visiblement plus sombre que la teinte naturelle en réponse à l'interaction avec le faisceau laser (30) et une deuxième plage d'énergie configurée pour faire en sorte que le matériau solide (10) de fibres végétales devienne visiblement plus clair que la teinte naturelle en réponse à l'interaction avec le faisceau laser (30), la sélection étant basée sur la nécessité pour chacune de la ou des marques d'au moins une plage d'énergie par unité de surface ; et
l'au moins un appareil d'orientation de faisceau laser (102) est configuré pour permettre au faisceau laser (30) de se déplacer sur le matériau solide (10) de fibres végétales en réponse à la commande de l'au moins un dispositif de commande (104) sur la base de l'au moins une marque pour former la représentation (40) de l'au moins une marque sur une surface du matériau solide (10) de fibres végétales avec l'au moins une plage d'énergie par unité de surface sélectionnée en un seul stade de processus du début à la fin.

2. Appareil selon la revendication 1, **caractérisé en ce que** l'appareil d'orientation de faisceau laser (104) comprend au moins un déflecteur de faisceau laser (50) ;
chacun du ou des lasers à dioxyde de carbone (100) est configuré pour diriger le faisceau laser (30) vers l'au moins un déflecteur de faisceau laser (50) qui est configuré pour dévier le faisceau laser (30) vers une zone de marquage (20) qui est configurée pour recevoir le matériau solide (10) de fibres végétales avec une teinte naturelle pour former la représentation (40) d'au moins une marque des une ou plusieurs marques sur celle-ci ;
l'au moins un dispositif de commande (104) est configuré pour commander l'au moins un déflecteur de faisceau laser (50) l'au moins un agencement optique (74) et/ou l'au moins un laser à dioxyde de carbone (10) sur la base des informations sur l'au moins une marque pour effectuer la sélection d'une plage d'énergie par unité de surface parmi la première plage d'énergie pour un faisceau laser (30) et la deuxième plage d'énergie ; et
l'au moins un déflecteur de faisceau laser (50) est configuré pour amener le faisceau laser (30) à se déplacer sur le matériau solide (10) de fibres végétales en réponse à la commande de l'au moins un dispositif de commande (104).

3. Appareil selon la revendication 1, **caractérisé en ce que** la marque comprend des informations sur un ou plusieurs motifs graphiques, un ou plusieurs signes alphanumériques et/ou symboles d'écriture de la représentation (40).

4. Appareil selon la revendication 1, **caractérisé en ce que** l'au moins un dispositif de commande (104) est configuré pour commander l'au moins un laser à dioxyde de carbone (100), l'au moins un agencement optique (74) et/ou l'au moins un appareil d'orientation de faisceau laser (102) pour diriger un faisceau laser dans une plage d'énergie fixe ou moyenne entre 0,5 J/cm² et 30 J/cm², l'énergie du faisceau laser (30) à la surface du matériau solide (10) de fibres végétales dépendant d'une vitesse de déplacement du faisceau laser (30) causée par l'au moins un appareil d'orientation de faisceau laser (102), d'une puissance optique du faisceau laser (30), d'une taille de point de faisceau optique et d'une distance de hachurage.

5. Appareil selon la revendication 1, **caractérisé en ce que** seule la deuxième plage d'énergie est sélectionnée pour former la représentation (40) définie par une combinaison de zones, l'une ayant la teinte naturelle et l'autre étant visiblement plus claire.

6. Appareil selon la revendication 1, 4 ou 5, **caractérisé en ce que** l'au moins un dispositif de commande (104) est configuré pour commander l'au moins un laser à dioxyde de carbone (100) et/ou l'au moins un appareil d'orientation de faisceau laser (104) pour diriger le faisceau laser (30) de la deuxième plage d'énergie dans une plage d'énergie fixe ou moyenne entre 0,5 J/cm² et 4,5 J/cm².

7. Appareil selon la revendication 1, **caractérisé en ce que** l'au moins un dispositif de commande (104) est configuré pour sélectionner uniquement la première plage d'énergie pour former la représentation (40) définie par une combinaison de zones, l'une ayant la teinte naturelle et l'autre étant visiblement plus sombre.

8. Appareil selon la revendication 1, 4 ou 7, **caractérisé en ce que** l'au moins un dispositif de commande (104) est configuré pour commander l'au moins un laser à dioxyde de carbone (100), l'au moins un agencement optique (74) et/ou l'au moins un appareil d'orientation de faisceau laser (102) pour diriger un faisceau laser de la première plage d'énergie dans une plage d'énergie fixe ou moyenne entre 4,5 J/cm² et 30 J/cm².

9. Appareil selon la revendication 1, 6 ou 8, **caractérisé en ce que** la puissance optique du laser à dioxyde de carbone (100) est constante ou varie de manière commandée, et l'au moins un dispositif de commande (104) est configuré pour commander la vitesse de déplacement du faisceau laser (30) pour effectuer la sélection entre la première plage d'énergie et la deuxième plage d'énergie.

10. Appareil selon la revendication 1, **caractérisé en ce que** le matériau solide (10) de fibres végétales est configuré pour se déplacer et l'au moins un appareil d'orientation de faisceau laser (102) est configuré pour amener le faisceau laser (30) à se déplacer sur le matériau solide (10) de fibres végétales en mouvement en réponse à la commande de l'au moins un dispositif de commande (104) sur la base de l'au moins une marque et du mouvement du matériau solide (10) de fibres végétales.

11. Appareil selon la revendication 1, **caractérisé en ce que** l'au moins un dispositif de commande (104) est configuré pour régler la première et/ou la deuxième plage d'énergie pour le faisceau laser (30) sur la base de la teinte naturelle et/ou de la composition du matériau solide (10) de fibres végétales.

12. Appareil selon la revendication 1, **caractérisé en ce que** l'au moins un dispositif de commande (104) est configuré pour régler la première et/ou la deuxième plage d'énergie pour un faisceau laser (30) sur la base de la taille et de la forme de la représentation (40).

13. Appareil selon la revendication 1, **caractérisé en ce que** l'appareil comprend une interface utilisateur (108) et l'au moins un dispositif de commande (104) est configuré pour présenter des informations sur l'avancement de la formation de la représentation (40) sur la surface du matériau solide (10) de fibres végétales.

14. Appareil selon la revendication 1, **caractérisé en ce que** l'au moins un dispositif de commande (104) comprend un ou plusieurs processeurs (900) ;
les une ou plusieurs mémoires (106) comportent un code de programme informatique ; et
les une ou plusieurs mémoires (106) et le code de programme informatique sont configurés pour, avec les un ou plusieurs processeurs (900), amener l'au moins un dispositif de commande à au moins :
commander l'au moins un appareil d'orientation de faisceau laser (102), l'au moins un agencement optique (74) et/ou l'au moins un laser à dioxyde de carbone (100) pour effectuer la sélection de la plage d'énergie par unité de surface dans la première plage d'énergie et la deuxième plage d'énergie sur la base de l'au moins une marque pour amener le faisceau laser (30) à se déplacer sur le matériau solide (10) de fibres végétales avec les plages d'énergie par unité de surface sélectionnées.

15. Procédé de marquage comprenant les étapes suivantes :
recevoir (1000), par au moins un dispositif de commande (104), des informations sur l'au moins une marque à partir d'une ou plusieurs mémoires (106) ;
émettre (1002) un faisceau laser (30), par au moins un laser à dioxyde de carbone (100) ;
diriger (1004), par au moins un appareil d'orientation de faisceau laser (102), le faisceau laser (30) vers une zone de marquage (20),
le procédé de marquage étant **caractérisé en ce que** la zone de marquage est configurée pour avoir matériau solide (10) de fibres végétales avec une teinte naturelle pour former une représentation (40) d'au moins une marque des une ou plusieurs marques sur celle-ci ; et étant en outre **caractérisé par** les étapes suivantes
commander (1006), par l'au moins un dispositif de commande (104), l'au moins un appareil d'orientation de faisceau laser (102), l'au moins un agencement optique (74) et/ou l'au moins un laser à dioxyde de carbone (100) sur la base des informations sur l'au moins une marque pour effectuer une sélection d'une plage d'énergie par unité de surface parmi une première plage d'énergie pour un faisceau laser (30) configurée pour faire en sorte que le matériau solide (10) de fibres végétales devienne visiblement plus sombre que la teinte naturelle en réponse à l'interaction avec le faisceau laser (30) et d'une deuxième plage d'énergie configurée pour faire en sorte que le matériau solide (10) de fibres végétales devienne visiblement plus clair que la teinte naturelle en réponse à l'interaction avec le faisceau laser (30), la sélection étant basée sur la nécessité pour chacune de la ou des marques d'au moins une plage d'énergie par unité de surface ; et
permettre (1008), par l'au moins un appareil d'orientation de faisceau laser (102), au faisceau laser (30) de se déplacer sur le matériau solide (10) de fibres végétales en réponse à la commande de l'au moins un dispositif de commande (104) sur la base de l'au moins une marque pour former la représentation (40) de l'au moins une marque sur une surface du matériau solide (10) de fibres végétales sur la base du déplacement du faisceau laser (30) avec l'au moins une plage d'énergie par unité de surface sélectionnée sur le matériau solide (10) de fibres végétales en un seul stade de processus du début à la fin.
